# EUROPEAN PATENT APPLICATION

(11) **EP 4 047 780 A1**
(43) Date of publication of application: **24.08.2022**
(21) Application number: 21199513.9
(22) Date of filing: 28.09.2021
(51) Int. Cl.: H02J 7/00

(54) **CHARGING METHOD AND APPARATUS, ELECTRONIC DEVICE AND STORAGE MEDIUM**

(30) Priority: 23.02.2021 CN 202110204825
(71) Applicant: Beijing Xiaomi Mobile Software Co., Ltd., Beijing 100085 (CN)
(72) Inventor: TSENG, Yaoyi, Beijing, 100085 (CN); XU, Ke, Beijing, 100085 (CN)
(74) Representative: Gunzelmann, Rainer

(57) **Abstract**

A charging method comprises: determining (S100) a time interval for charging a battery according to historical charging data; charging (S200) the battery via a first charging policy within the time interval, the first charging policy including a first preset charging parameter; acquiring (S300) a present charging parameter when the battery is charged according to the first charging policy; and when the present charging parameter reaches the first preset charging parameter, maintaining a present electric quantity of the battery; determining (S400) a starting time when the battery is charged according to a second charging policy according to a state of a terminal device and a cut-off time of the time interval; and after a time when the present electric quantity is maintained reaches the starting time, charging (S500) the battery via the second charging policy, and charging the battery full from the present electric quantity before the cut-off time.

## Description

### TECHNICAL FIELD

The present disclosure relates to the technical field of charging, and more particularly, to a charging method and apparatus, an electronic device and a storage medium.

### BACKGROUND

In an era when electric power is applied widely, electric energy provides necessary energy for various fields. In an actual application, a storage medium of electric energy is generally a battery, and an electricity user can be provided with electric energy conveniently via the battery. Most batteries are chargeable batteries, for example, various charging batteries such as lithium ion batteries and storage batteries. With the chargeable performance, the service rate of the battery is improved greatly. The battery can be charged and discharged for many times, such that a condition of disposable use of the battery is reduced.

When the battery is charged, it is necessary to use a charging technology. More electric quantity can be charged into the battery via the charging technology, and meanwhile, a condition of overcharge of the battery can be reduced, such that the service life of the battery is prolonged.

### SUMMARY

The present disclosure provides a charging method and apparatus, an electronic device and a storage medium.

According to a first aspect of embodiments of the present disclosure, there is provided a charging method, which includes: determining a time interval for charging a battery according to historical charging data; charging the battery via a first charging policy within the time interval, the first charging policy including a first preset charging parameter; acquiring a present charging parameter when the battery is charged according to the first charging policy; and when the present charging parameter reaches the first preset charging parameter, maintaining a present electric quantity of the battery; determining a starting time when the battery is charged according to a second charging policy according to a state of a terminal device and a cut-off time of the time interval; and after a time when the present electric quantity is maintained reaches the starting time, charging the battery via the second charging policy, and charging the battery full from the present electric quantity before the cut-off time.

In an embodiment, the operation of charging the battery via the first charging policy within the time interval may include: the first preset charging parameter is determined; and the battery is charged according to the first preset charging parameter and the present charging parameter.

In an embodiment, the operation of determining the first preset charging parameter may include: the first preset charging parameter is determined according to at least one of: attribute data of the battery, the historical charging data, or state information of the terminal device including the battery.

In an embodiment, the first preset charging parameter may include at least one of a first cut-off voltage or a first cut-off current; the present charging parameter may include at least one of a present battery voltage or a present charging current; and the operation of charging the battery according to the first preset charging parameter and the present charging parameter may include at least one of following scenarios: the battery is charged at a constant current according to the first cut-off voltage until the present battery voltage reaches the first cut-off voltage; or, the battery is charged at a constant voltage according to the first cut-off current until the present charging current reaches the first cut-off current.

In an embodiment, the operation of maintaining the present electric quantity of the battery when the present charging parameter reaches the first preset charging parameter may include: the present electric quantity of the battery is determined when the present charging parameter reaches the first preset charging parameter; and a fluctuation range of the present electric quantity is maintained in a preset threshold value by floating charge.

In an embodiment, the operation of charging the battery via the second charging policy after the time when the present electric quantity is maintained reaches the starting time and charging the battery full from the present electric quantity before the cut-off time may include: a second preset charging parameter through which the battery is charged via the second charging policy is determined according to the state of the terminal device; the second preset charging parameter includes at least one of: a second cut-off voltage for charging the battery at a constant current or a second cut-off current for charging the battery at a constant voltage; and the battery is charged according to the second preset charging parameter, and the battery is charged full from the present electric quantity before the cut-off time.

In an embodiment, the using state may include at least one of following data: whether the terminal device in an on state is in a dormant state, whether there is an application in a front desk running state and a bright screen state, or power consumption.

In an embodiment, the operation of determining the time interval for charging the battery according to the historical charging data may include: a time interval for charging the battery full is determined according to time information of a charging interval in the historical charging data; or, a time interval for charging the battery full is determined according to the historical charging data and a deep learning model.

In an embodiment, the method may further include: a time when a charging connection is established is determined; the operation of charging the battery via the first charging policy may include: it is determined that the battery is charged via the first charging policy in response to determining that the time when the charging connection is established is within the time interval.

In an embodiment, the method may further include: the battery is charged via a third charging policy in response to determining that the time when the charging connection is established is not within the time interval; and the third charging policy may be different from the first charging policy and the second charging policy.

According to a second aspect of embodiments of the present disclosure, there is provided a charging apparatus, which includes a time interval determination module configured to determine a time interval for charging a battery according to historical charging data; a first charging module configured to charge the battery via a first charging policy within the time interval, herein the first charging policy includes a first preset charging parameter; an electric quantity maintaining module configured to acquire a present charging parameter when the battery is charged according to the first charging policy; and when the present charging parameter reaches the first preset charging parameter, maintain a present electric quantity of the battery; a starting time determination module configured to determine a starting time when the battery is charged according to a second charging policy according to a state of a terminal device and a cut-off time of the time interval; and a second charging module configured to charge the battery via the second charging policy after a time when the present electric quantity is maintained reaches the starting time and charge the battery full from the present electric quantity before the cut-off time.

In an embodiment, the first charging module may include: a first preset charging parameter determination module, configured to determine the first preset charging parameter; and a charging unit, configured to charge the battery according to the first preset charging parameter and the present charging parameter.

In an embodiment, the electric quantity maintaining module may include: a present electric quantity determination unit, configured to determine the present electric quantity of the battery when the present charging parameter reaches the first preset charging parameter; and a floating charge unit, configured to maintain a fluctuation range of the present electric quantity in a preset threshold value by floating charge.

In an embodiment, the second charging module may include: a second preset charging parameter determination unit, configured to determine a second preset charging parameter through which the battery is charged via the second charging policy according to the state of the terminal device; herein the second preset charging parameter comprises at least one of: a second cut-off voltage for charging the battery at a constant current, or a second cut-off current for charging the battery at a constant voltage; and a second charging unit, configured to charge the battery according to the second preset charging parameter and charging the battery full from the present electric quantity before the cut-off time.

According to a third aspect of embodiments of the present disclosure, there is provided a computer-readable storage medium in which computer-executable instructions are stored, the computer-executable instructions are executed by a processor to implement the method as described in any abovementioned embodiments.

The technical scheme of the embodiment of the present disclosure has the following beneficial effects.

The time interval for charging the battery is determined according to the historical charging data, and thus, the time interval may be determined in a targeted manner according to different features of terminal devices used by a user, such that the first charging policy is enabled precisely to charge the battery, and therefore, the problem of poor charging experience such as slow charging speed when the first charging policy is enabled improperly.

The battery is charged in the charging time via the first charging policy, and when the present charging parameter reaches the first preset charging parameter, a present electric quantity of the battery is maintained. Different batteries are different in first preset charging parameter. In different using phases of a same battery, the first preset charging parameter is also different as a result of aging of the battery and the like, such that when the present charging parameter in the charging process of the battery according to the first charging policy reaches the first preset charging parameter, the electric quantity of the battery is maintained at the present electric quantity, and the present electric quantity may guarantee enough electric quantity of the battery. Thus, the loss and aging of the battery as the battery is charged full directly and the battery is kept in a charging state for a long time after being charged full, such that the service life of the battery may be prolonged.

The starting time of charging the battery is determined via the second charging policy according to the using state of the terminal device and the cut-off time of the time interval, the battery is charged via the second charging policy after the time of the present electric quantity is maintained reaches the starting time for charging via the second charging policy, and the electric quantity of the battery is charged full before the cut-off time of the charging time as the battery is charged via the second charging policy. The battery is charged in a charging mode of combining the first charging policy with the second charging policy, different using states correspond to different starting times according to the using state of the terminal device and the cut-off time of the time interval, and the battery is continuously charged via the second charging policy and is charged full before the cut-off time of the charging time. By combining the time interval for charging the battery, the condition of the battery and the using state of the terminal device, the battery in the terminal device is charged flexibly, conditions that the battery which is charged full is in the charging state or the full charging state for a long time and the like are reduced, and aging of the battery is delayed, such that the service life of the battery is prolonged.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart showing a charging method according to an exemplary embodiment.
FIG. 2 is a flow chart showing a method for charging a battery via a first charging policy according to an exemplary embodiment.
FIG. 3 is a flow chart showing a method for maintaining a present electric quantity according to an exemplary embodiment.
FIG. 4 is a schematic diagram of charging a battery full from a present electric quantity before cut-off time when the battery is charged via a second charging policy according to an exemplary embodiment.
FIG. 5 is a flow chart showing a method for charging a battery according to a second preset charging parameter according to an exemplary embodiment.
FIG. 6 is a structural schematic diagram of a charging apparatus according to an exemplary embodiment.
FIG. 7 is a structural schematic diagram of a terminal device according to an exemplary embodiment.
FIG. 8 is a curve graph of charging a terminal device at night according to an exemplary embodiment.
FIG. 9 is a flow chart showing another charging method according to an exemplary embodiment.
FIG. 10 is a block diagram of a terminal device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Service life of battery is an important index affecting the battery. To a certain extent, the service life of the battery is dependent on the aging degree of the battery to a great extent. Aging of the battery is affected by many factors, for example, abnormal temperature (a temperature exceeding a temperature range in which the battery is used normally), abnormal voltage (a voltage exceeding a voltage range in which the battery is used normally), long-term full charge (for example, the continuous full charge time is longer than a certain duration) and the like, the overhigh voltage or long-term full charge/overcharge will lead to long-term high voltage storage of the battery.

Under normal conditions, it is necessary to preset an electric quantity value of charging for the battery charge as a temporary charge pausing point, and charging of the battery is paused after the electric quantity of the battery reaches the preset charging electric quantity value. The preset charging electric quantity value corresponding to the temporary charge pausing point may be a state of charge (SOC) value with a preset surplus capacity, for example, 80%, as the temporary charge pausing point. When the battery is charged and the electric quantity of the battery is greater than the preset SOC value, charging of the battery is paused. A restart charging point may be further preset, and when the restart charging point is reached, the battery is recharged till being charged full.

The preset temporary charge pausing point in the method is fixed, and the restart charging point at which the battery is recharged is also fixed. Since the temporary charge pausing points of different batteries are different, the temporary charge pausing points of the same one battery in different using phases are also different, and the times needed by different batteries that are charged full are also different. Therefore, the method may not adjust the charging policies from the temporary charge pausing points and the restart charging point to charge full points on different batteries. Thus method will result in conditions such as long-time connection to a power supply to charge, full charge, overcharge and high temperature of the battery when the battery is charged, such that aging of the battery is accelerated and the service life of the battery is shortened.

Batteries used in all the fields are such, for example, mobile phone batteries. With popularization of 5G, power consumption of the mobile phone will affect the charging speed of the mobile phone battery and the service life of the battery to a certain extent. In order to reduce aging of the battery and prolong the service life of the battery, a high requirement is put forward on the charging method for the battery.

Certainly, it may further be chargeable batteries such as a power battery of an electric automobile, a storage battery or a lithium ion battery used in other application scenarios.

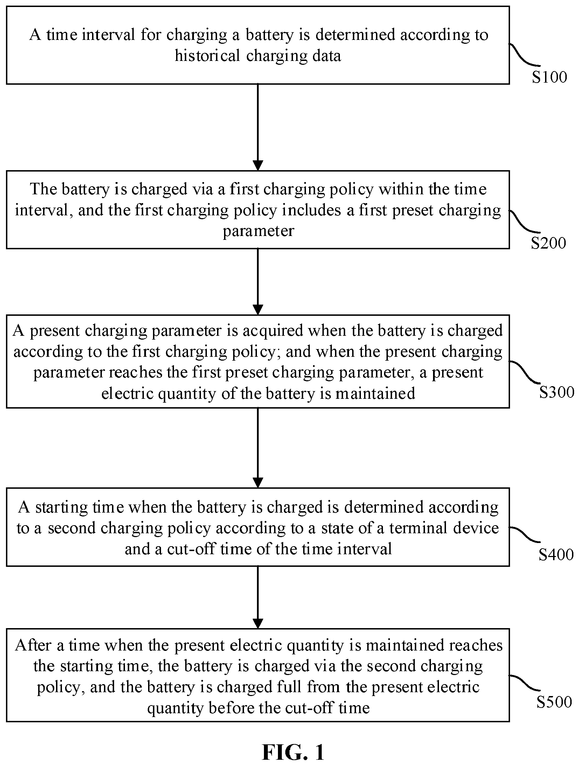

Referring to FIG. 1, a flow chart showing a charging method provided by the technical scheme is provided, and the charging method includes as follows.

At S100, a time interval for charging a battery is determined according to historical charging data.

At S200, the battery is charged via a first charging policy within the time interval, and the first charging policy includes a first preset charging parameter.

At S300, a present charging parameter is acquired when the battery is charged according to the first charging policy; and when the present charging parameter reaches the first preset charging parameter, a present electric quantity of the battery is maintained.

At S400, a starting time when the battery is charged is determined according to a second charging policy according to a state of a terminal device and a cut-off time of the time interval.

At S500, after a time when the present electric quantity is maintained reaches the starting time, the battery is charged via the second charging policy, and the battery is charged full from the present electric quantity before the cut-off time.

The method may be executed at least in a mobile terminal, namely an execution body of the method may at least include the mobile terminal. The mobile terminal may include a mobile phone, a tablet computer, a vehicle-mounted central control device, a wearable device, a smart device, etc. The smart device may further include a smart office device, a smart home device, etc.

At S100, since the time interval for charging the battery is determined according to the historical charging data of the battery in the terminal device and the time interval is determined in a targeted manner according to different features of terminal devices used by a user, the charging time reflects the time feature of battery charging. After the time interval for charging the battery is determined, the starting time and the cut-off time of charging may be determined.

In the scheme of the embodiment of charging the battery in the time interval in a more optimized manner, the loss of the battery in the charging process is reduced, the aging speed of the battery is decreased and the service life of the battery is prolonged. Before the battery is charged, it is necessary to acquire the historical charging data of the battery in the terminal device first and then determine the time interval for charging the battery according to the historical charging data of the battery, such that it is convenient to charge the battery in the time interval.

In an embodiment, the time interval may be a time period in which the battery is charged at the highest frequency in the terminal device or a time period in which the terminal device is used at a lower frequency. For example, a mobile terminal needed to be carried or worn in daytime by a user such as a mobile phone or a tablet personal computer is illustrated. At night, the terminal device is lower in frequency or probability of being used by the user, and it is to be used the next day after being charged at night. However, night is a relatively long time period, and the specific time period may be determined according to the historical charging data of the terminal device itself.

The terminal device may be either the mobile terminal or other terminal device with a battery, for example, an electric automobile, etc. The batteries in the terminal devices may be chargeable batteries, for example, lead storage batteries, lithium ion batteries or the like.

The historical charging data of the battery may be historical charging data stored in a controller, a data storage medium and/or a corresponding application program in the terminal device within a certain time range, and the charging data may include the historical charting time data of the battery, etc. For example, it may be historical charging time information within one week and one month prior to the present moment. The time interval for charging a battery may be determined according to the historical charging data. Since the time interval for charging is determined according to the historical charging data of the battery, the time interval may reflect the time range for charging the battery, such that the battery may be charged according to the time interval. Further, when the battery is charged, whether actual charging time is within the time interval is determined, and then how to charge the battery is determined.

The determined time interval for charging herein is determined according to the historical charging data of the terminal device, and the time intervals determined according to different historical charging data of different terminal devices are different, and may be either a certain time interval at night or a certain time interval in daytime.

At S200, in order to delay aging of the battery and reduce conditions such as long-term charging, full charge and overcharge of the battery, the battery is charged according to the scheme in the embodiment. When the actual charging time when the battery is charged in the time interval determined at S100, the battery is charged via the first charging policy.

The first charging policy includes the first preset charging parameter, the first preset charging parameter is configured to charge the battery via the first charging policy and charge the battery according to the first preset charging parameter. The first preset charging parameter may be taken as a reference condition for charging the battery, for example, whether the battery is continued to be charged in the present charging model, switch the charging mode, maintain the present electric quantity of the battery, etc.

The first preset charging parameter includes a charging voltage and/or a charging current, etc., and the battery is charged according to these charging parameters. For example, when a present charging voltage and/or a present charging current for charging the battery reaches the charging voltage and/or the charging current in the first preset charging parameter, the charging mode and the like of the battery are determined again.

The first preset charging parameter is related to the terminal device and the battery itself. Different terminal devices or different batteries may have different first preset charging parameters in different using phases. Different batteries may be different in first preset charging parameter. The first preset charging parameter is also different as a result of use of the battery, such that the first preset charging parameters in different using phases may be also different.

By charging the battery according to the first charging policy, the first preset charging parameter is determined according to the states of the terminal device and the battery, such that the battery may be charged in a fit manner, and thus, the loss of the battery in the charging process is reduced, the aging of the battery is delayed and the service life of the battery is prolonged.

At S300, after the battery is charged via the first charging policy, the present charging parameter through which the battery is charged according to the first charging policy is acquired. The present charging parameter and the first preset charging parameter are same in parameter type, such that it is convenient to charge the battery by combining the present charging parameter with the firs preset charging parameter.

For example, the first preset charging parameter includes a first preset charging voltage, and the present charging parameter also includes the present charging voltage. The first preset charging parameter includes a first preset charging current, and the present charging parameter also includes the present charging current.

The present electric quantity of the battery is maintained when the present charging parameter through which the battery is charged reaches the first preset charging parameter. When the present charging parameter reaches the first preset charging parameter, it illustrates that there has been enough electric quantity in the battery for the terminal device to use, and the electric quantity in the battery is merely not in a full electric state.

After the electric quantity of the battery is maintained, since the present time is within the time interval for charging the battery, it is further necessary to charge the battery via the second charging policy after the battery is charged via the first charging policy. Thus, when the present charging parameter reaches the first preset charging parameter, the present electric quantity of the battery is maintained. When a condition of charging the battery according to the second charging policy is met, charging is restored automatically according to the second charging policy again, such that it is expected to charge the battery full before the cut-off time of the time interval.

Thus, the battery may be charged in a first stage and is not charged fully directly, and even the battery is charged continuously after being charged fully, such that conditions such as long-time connection to a power supply to charge, full charge, overcharge and high temperature of the battery when the battery is charged are reduced, the loss of the battery in the charging process is reduced, the aging of the battery is delayed and the service life of the battery is prolonged.

In an embodiment, the acquiring the present charging parameter through which the battery is charged according to the first charging policy may include: a charging parameter through which the battery is charged via the first charging policy is acquired according to a preset time interval; and the charging parameter is taken as the present charging parameter.

At S400, the starting time when the battery is charged is determined according to the second charging policy according to the state of the terminal device and the cut-off time of the time interval.

The state of the terminal device may be detected via a corresponding sensor or controller in the terminal device. The state of the terminal device may include a using state of the terminal device, and the using state may indicate whether the terminal device in an on state is in a dormant state, whether there is an application in a front desk running state and a bright screen state, and/or power consumption. Exemplarily, if the terminal device is in the using state, specific using condition information is further acquired, and the using condition information may include a bright screen duration (may be also called on-screen duration), an off-screen duration, power consumption and/or a detected touch operation. In different using states, the power consumption of the terminal device is different. In the charging time interval, the charging speed and the charging time corresponding to the different using states of the terminal device may be also different.

The time interval for charging the battery includes the starting time and the cut-off time. After the state of terminal device is determined, the starting time for charging is determined according to the second charging policy according to the state of the terminal device and the cut-off time of battery charging in the time interval, and the battery is charged again via the second charging policy according to the starting time of the second charging policy. When the starting time of the second charging policy is a time of charging the battery full at the cut-off time of the time interval or a time of charging the battery full before a time threshold value of the cut-off time of the time interval when the battery is charged via the second charging policy. For example, the battery is charged full in 5 minutes prior to the cut-off time of the time interval.

A specific process of determining the starting time when the battery is charged according to the second charging policy according to the state of the terminal device and the cut-off time of the time interval may be determined a corresponding rule among the state of the preset terminal device, the time interval and the starting time of the preset charging stage. It may further be determined via a trained network model, the state of the terminal device and the cut-off time of the time interval may be taken as input of the network model, and output of the network model may be taken as the starting time of charging via the second charging policy.

Since the determined time intervals of different batteries are different, the state of the terminal device may also be different, such that the determined starting times of charging the batteries of different terminals according to the second charging policy are also different. In different using periods of the same battery, the determined starting times of charging the battery according to the second charging policy are also different.

At S500, within the time interval for charting the battery, after a time when the present electric quantity is maintained reaches the starting time, the battery is charged via the second charging policy, and the battery is charged full from the present electric quantity before the cut-off time.

Since the starting times when the battery is charged according to the second charging policy are determined according to the state of the terminal device and the cut-off time of the time interval, after the battery is charged again according to the starting time when the battery is charged according to the second charging policy, the battery will be charged full before the cut-off time of the time interval, or the battery is charged full at the cut-off time, such that a purpose of charging more electric quantity into the battery is achieved.

According to the scheme, by determining the time interval for charging the battery, the battery is charged via the first charging policy within the time interval. The first charging policy includes the first preset charging parameter, and different batteries are different in the first preset charging parameter. In different using phases of a same battery, the first preset charging parameter is also different as a result of aging of the battery and the like, such that the first charging policy is also different. Therefore, according to the scheme of the embodiment, the battery may be charged in a targeted manner, and the present electric quantity of the battery is maintained when the present charging parameter reaches the first preset charging parameter. Thus, the loss and aging of the battery as the battery is charged full directly and the battery is kept in a charging state for a long time after being charged full, such that the service life of the battery may be prolonged.

The starting time when the battery is charged according to the second charging policy is determined according to the actual using state of the terminal device and the cut-off time of the time interval. Different using states correspond to different starting times. The battery is charged again via the second charging policy, and the battery is charged full before the cut-off time. By combining the first charging policy with the second charging policy, the battery is charged in stages, such that the battery in the terminal device is charged flexibly, conditions that the battery which is charged full is in the charging state or the full charging state for a long time and the like are reduced, and aging of the battery is delayed, such that the service life of the battery is prolonged.

In an embodiment, at S100, the operation of determining the time interval for charging the battery according to the historical charging data includes: a time interval for charging the battery full is determined according to time information of a charging interval in the historical charging data.

The historical charging data includes time information of historical charge of the terminal device, and the time information includes the starting time and the finishing time of historical charge. The starting time of the time interval for charging the battery may be determined according to the starting time of historical charge, and the cut-off time of the time interval for charging the battery may be determined according to the finishing time of the historical charge. Thus, the time interval for charging the battery may be determined according to the time information of the historical charge in the historical charging data.

Specifically, the starting time of the time interval may be determined according to an average value of the starting time of historical charge, and an average starting time of the starting time of historical charge is determined as the starting time of the time interval. Specifically, the cut-off time of the time interval is determined according to an average value of the cut-off time of historical charge, and an average cut-off time of the cut-off time of historical charge is determined as the cut-off time of the time interval.

Further, the starting time of historical charge may be a time for establishing a charging connection in historical charge, and the cut-off time of historical charge may be a time for cut-off the charging connection.

In another embodiment, a time interval for charging the battery full may further be determined according to the historical charging data and a deep learning model.

In an embodiment, the historical charging data includes the time information of historical charge, and the time information includes the starting time and the finishing time of historical charge. The charging time information in the historical charging data is taken as input of the deep learning model, and output of the deep learning model is taken as the time interval for charging the battery. The deep learning model is a trained model, and the time interval for charging the battery may be obtained automatically via the deep learning model.

In another embodiment, the method for determining the time interval further includes: a standby time interval for charging the battery is determined according to the historical charging data and an alarm clock time of the terminal device including the battery.

After the standby time interval is determined, whether the alarm clock time of the terminal device is within the standby time interval is determined; if the alarm clock time of the terminal device is within the standby time interval, cut-off time of the standby time interval is updated to the alarm clock time; and the standby time interval is taken as the time interval for charging the battery.

The time interval may further be determined according to the historical charging data, and then the cut-off time of the time interval determined according to the historical charging data is updated to the alarm clock time of the terminal device when it is detected that the alarm clock time of the terminal device is within the time interval, that is, the alarm clock time of the terminal device is determined as the cut-off time of the time interval.

In another embodiment, the method further includes: a time when a charging connection is established is determined.

Before the time interval for charging the battery is determined, the time when the charging connection is established is determined first, and the battery is further charged according to the time when the charging connection is established. The time when the charging connection is established may be a time of connecting a charger to the terminal device, and the time of connecting the charger to the terminal device is determined as the time when the charging connection is established.

At S200, the operation of charging the battery via the first charging policy includes: the battery is charged via the first charging policy if the time when the charging connection is within the time interval.

After the time when the charging connection is established is determined, whether the battery is charged via the first charging policy is determined according to the time interval and the time when the charging connection is established. Whether the time when the charging connection is established is within the time interval is determined, and the battery is charged via the first charging policy if the time when the charging connection is established is within the time interval.

In another embodiment, the method further includes: the battery is charged via a third charging policy if the time when the charging connection is established is not within the time interval; and the third charging policy is different from the first charging policy and the second charging policy.

When the time when the charging connection is established is not within the time interval, it is unnecessary to charge the battery according to the first and second charging policies according to the S200 to S500 in the scheme. The second charging policy herein may be a charging policy of charging the battery full directly, and the second charging policy is not limited herein. All the charging policies different from the first charging policy are the second charging policy.

In an embodiment, if the time when the charging connection is established is beyond/outside the time interval, a charging policy such as a fast charge policy may be adopted as the third charging policy. Certainly, the third charging policy may further be a preset charging policy besides the fast charge policy.

Exemplarily, the fast charging policy is a charging policy with average charging powder of 10W or 15W. For example, the time interval is night, the time being not within the time interval is daytime. If a mobile phone is connected to a charging socket (i.e., the charging connection is established) in daytime, by considering the probability of cutting off charging connection and taking away the mobile terminal anytime as a result of mobility of the user in daytime, the fast charging policy may be adopted in order to charge the mobile terminal full rapidly.

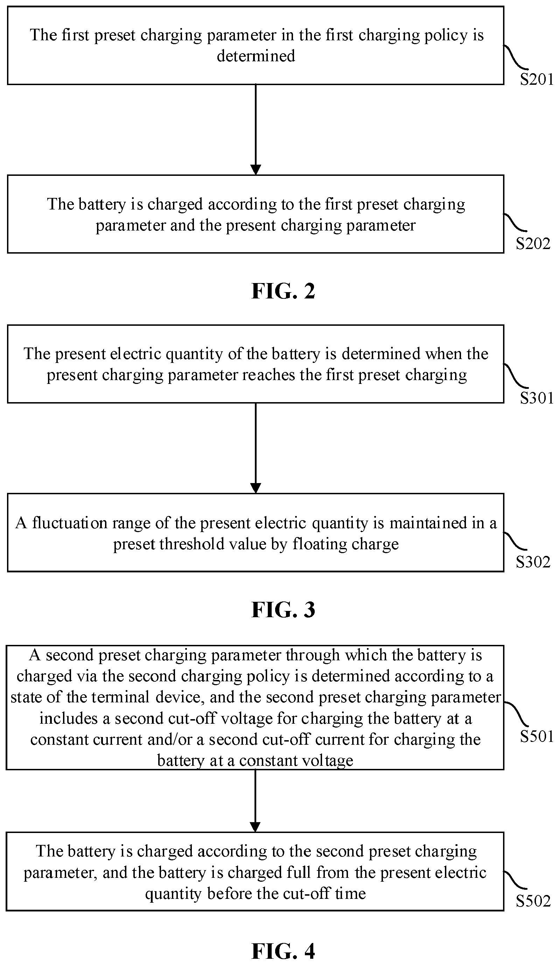

In an embodiment, a method for charging a battery via a first charging policy is further provided. Referring to the FIG. 2, it is a flow chart showing the method. At S200, the operation of charging the battery via the first charging policy may further include the following operations.

At S201, the first preset charging parameter in the first charging policy is determined; and

At S202, the battery is charged according to the first preset charging parameter and the present charging parameter.

For operation S201, after the first preset charging parameter is determined, it is convenient to charge the battery according to the first preset charging parameter and the present charging parameter.

The operation of determining the first preset charging parameter includes: the first preset charging parameter is determined according to at least one of: attribute data of the battery, the historical charging data, or state information of the terminal device including the battery.

The battery itself has certain attribute information, and the attribute of the battery may be represented via attribute data.

The attribute information of the battery may be divided into at least one of following scenarios:
a type of the battery: for example, batteries assembled by battery cells in different systems are different types of batteries; and the batteries may belong to different battery types as a result of different stacking shapes and/or different tabs among the battery cells;
a brand of the battery;
rated parameters of the battery;
expected maximum service life of the battery;
aging extent of the battery;
whether the battery is an original battery of the terminal device; or
adapting degree between the battery and a charging circuit in the terminal device and the like.

The rated parameter of the battery may include a rated voltage, a rated current and/or a rated capacity of the battery.

The aging degree of the battery includes a ratio of an actual capacity of the battery to the rated capacity of the battery, a ratio of a charged circulation number of times of the battery to the maximum charging circulation number of times and the like.

In an embodiment, the aging degree of the battery may further be reflected by the actual capacity of the battery.

The historical charging data includes the time information of historical charge, historical charge circulation number of times and the like.

The state information of the terminal device may include using state information and aging state information of the terminal device. With use of the battery, attribute data of the battery corresponding to different using phases may be different. After the attribute data of the battery changes, it may be necessary to adjust the attributed data when the battery is charged, such that the battery may be charged in a targeted manner according to the actual attributed data of the battery, and thus, aging of the battery may be reduced and the service life of the battery may be prolonged.

The using state may indicate whether the terminal device in an on state is in a dormant state, whether there is an application in a front desk running state. Exemplarily, if the terminal device is in the using state, specific using condition information is further acquired, the using condition information may include a bright screen duration, an off-screen duration and/or power consumption, etc. The electric quantities of the battery consumed by the terminal device in different using states are different, the first preset charging parameter is determined according to the using state of the terminal device, and the battery may be charged according to the different first preset charging parameters in different using states. Thus, the first preset charging parameter is adjusted, and the first preset charging parameter is determined flexibly according to the actual using condition of the terminal device, such that the service life of the battery may be prolonged.

The aging state of the device includes, but not limited to, an aging state of the battery in the terminal device and/or an aging state of a main board in the terminal device; and the main boards in different aging state are different in power consumption and/or may have electric leakage phenomena.

The aging state of the battery in the terminal device and/or the aging state of the main board in the terminal device may affect charge of the battery. The battery is charged according to the aging state of the battery, and the batteries with different aging states may different in first preset charging parameters correspondingly, such that the battery may be charged according to the actual state of the battery, thereby alleviating further aging of the battery. And/or the battery is charged according to the aging state of the main board, and different first preset charging parameters are determined according to the main boards in different aging states, such that the battery may be charged according to the power consumption and/or the electric leakage condition of the main board. Similarly, occurrence of a condition of aggravation of battery aging may be reduced, so that the service life of the battery is prolonged.

In a word, in the embodiment of the present disclosure, the first preset charging parameter is determined for a single battery, which is an individual charging parameter rather than a stipulated standard charging pause point, such that a relationship between battery aging and the demand on battery charging may be further balanced by adopting this individual charging parameter, and therefore, the service life of the battery is prolonged as soon as possible while a charging experience degree of satisfaction for charging the battery is further ensured.

In an embodiment, the operation of determining the first preset charging parameter according to at least one of the attribute data of the battery, the historical charging data or the state information of the terminal device including the battery includes: a charging pause point of the first charging policy is determined within a preset interval according to at least one of the attribute data of the battery, the historical charging data or the state information of the terminal device including the battery, and the first preset charging parameter is determined according to the charging pause point of the first charging policy.

Exemplarily, the preset interval may be any one numerical values from 50% to 95%, for example, values such as 60%, 70%, or 70%, 80% or 85% and the like.

According to the specific attribute information of the battery, it is determined that the battery in the mobile terminal is a battery with a relatively low charging speed, the charging pause point of the first charging policy is determined between 75% and 85% according to at least one of the historical charging data or the state information of the terminal device including the battery. If the battery in the mobile terminal is a battery with a relatively high charging speed, the charging pause point of the first charging policy is determined between 55% and 75% according to at least one of the historical charging data or the state information of the terminal device including the battery.

The battery with the relatively low charging speed and the battery with the relatively high charging speed here may be determined according to a rated charging rate and a preset rate threshold value corresponding to the rated charging power of the battery, for example, the rated charging rate is lower than the preset charging rate, the battery with the relatively low charging speed is determined, and otherwise, the battery with the relatively high charging speed is determined.

Information such as aging degree may reflect the charging rate of the battery in the preset charging stage, and in a word, the charging pause point will be determined in combination with the charging rate of the battery. Then, the first preset charging parameter is determined then according to the charging pause point, different charging pause points correspond to different first preset charging parameters, and the battery is charged in the first stage via the first charging policy for the specific state of the battery and the terminal device.

It is to be understood that a duration needed to charge the battery full continuously may be determined according to the charging historical data and/or a duration needed from the charging parameter to the first preset charging parameter when the battery is charged may be determined according to the charging historical data.

Therefore, the first preset charging parameter may be determined precisely in an auxiliary manner according to the historical charging data.

For operation S202, after the first preset charging parameter is determined, the battery is charged by combining the first preset charging parameter with the charging parameter for charging the battery in the charging process via the first charging policy until the charging parameter for overcharge of the battery via the first charging policy reaches the first preset charging parameter.

In an embodiment, the first preset charging parameter includes a first cut-off voltage and/or a first cut-off current, and the present charging parameter includes a present battery voltage and/or a present charging current.

At S202, the operation of charging the battery according to the first preset charging parameter and the present charging parameter includes the following operations.

The battery is charged at a constant current according to the first cut-off voltage until the present battery voltage reaches the first cut-off voltage; and/or, the battery is charged at a constant voltage according to the first cut-off current until the charging current reaches the first cut-off current.

The battery is charged at a constant current independently according to the first cut-off voltage until the present battery voltage reaches the first cut-off voltage when the battery is charged via the first charging policy. The charging current at a constant current may be either pre-set or determined according to the attributed data of the battery or the using condition of the terminal device.

The battery may be charged at a constant voltage independently according to the first cut-off current until the present charging current reaches the first cut-off current.

The battery may further be charged at a constant current by way of the constant current charging mode according to the first cut-off voltage in combination with the first cut-off voltage and the first cut-off current until the present charging voltage reaches the first cut-off voltage, and then the battery is then charged at a constant voltage according to the first cut-off current until the present charging current reaches the first cut-off current. Thus, after the voltage value of the battery reaches the first cut-off voltage, more electric quantity may be charged into the battery continuously.

In another embodiment, if the charging connection is established in the time interval and the present charging parameter for charging the battery via the first charging policy has reached the first preset charging parameter, the battery is no longer charged via the first charging policy until the electric quantity of the battery is directly maintained at the present electric quantity. After the time when the electric quantity of the battery is maintained reaches the starting time for charging the battery via the second charging policy, the battery is charged via the second charging policy.

In another embodiment, before the present charging parameter for charging the battery via the first charging policy reaches the first preset charging parameter, the method further includes the following operations.

The state of the terminal device is detected. In order to differentiate the state of the terminal device used in the starting time for charging the battery via the second charging policy, the state of the terminal device here is taken as a first state of the terminal device, and the state of the terminal device used in the starting time when the battery is charged via the second charging policy is taken as a second state of the terminal device.

The battery is charged according to the detected state of the terminal device until the present charging parameter for charging the battery reaches the first preset charging parameter.

The state of the terminal device includes, but is not limited to:
the using state of the terminal device;
a power consumption state of the terminal device;
an expected power consumption state of the terminal device within residual time of the time interval, for example, a user enjoys playing a piece of news with the mobile phone within a preset time, although the present mobile phone is in a power-off state or a dormant state, expected power consumption before the charging connection of the terminal device is cut off may be determined according to historical using data of the terminal device, it may be taken as a determining ground for the first preset charging parameter in the first charging policy.

Exemplarily, the state of the terminal device may specifically include the using state of the terminal device detected, and a first using state of the terminal device is determined according to the first power consumption and/or the off-screen duration of the terminal device. The battery is charged via the first charging policy when the first using state meets the first preset using state according to the first using state and a first preset using state until the present charging parameter for charging the battery reaches the first preset charging parameter. The first preset using state includes first preset power consumption and/or a preset off-screen duration.

The first power consumption and/or the off-screen duration of the terminal device are detected, and whether the first using state of the terminal meets the first preset using state is determined by comprising the first power consumption and/or the off-screen duration with the first preset using state. It is specifically determined via a first condition, including: whether the first using state of the terminal device meets the first preset using state is determined according to the detected first power consumption and the first preset power consumption and/or the off-screen duration and the preset off-screen duration. Certainly, it may further be determined according other parameters of the terminal device and may be set according to an actual using scene.

The first power consumption may be an average value of power consumption of the terminal device within the preset duration, i.e., average power consumption, and the average power consumption is taken as first power consumption of the terminal device. The off-screen duration may be used in the terminal device with a display function and the off-screen may represent whether the terminal device is used. For example, the mobile terminal such as the mobile phone, the screen of the mobile phone in an off-screen state shows that the mobile phone is not in the using state presently, and when the mobile phone is in the using state, the screen of the mobile phone is in a bright screen state. It may further be terminal device such as an electric automobile, and a display area of a speedometer and a central control display of the electric automobile are in the off-screen state, which shows that the electric automobile is in an unstarted state.

It may be determined that the first using state of the terminal device meets the first preset using state when the first power consumption is smaller than the first preset power consumption and/or the off-screen duration is longer than the preset off-screen duration. It is determined that the first using sate of the terminal device does not meet the first preset using state when the first power consumption is not smaller than the first preset power consumption and/or the off-screen duration is not shorter than the preset off-screen duration. When the first using state of the terminal device does not meet the first preset using state, the battery may be charged in a charging mode different from the first charging policy and the second charging policy, for example, a third charging policy and the like. The preset power consumption and the preset off-screen duration may be set according to the actual application scene, and the preset power consumption and the preset off-screen duration corresponding to different application scenes may be different.

By detecting the state of the terminal, the charging policy suitable for the present condition is determined dynamically according to the state of the terminal, and the loss of the battery in the charging process may be reduced to the maximum extent under a circumstance that enough electric quantity may be charged into the battery, so that the service life of the battery is prolonged.

Certainly, the operation of detecting the using state of the terminal device may further include: displacement information of the terminal device, light intensity information of an environment and the like are detected; and then the first using state of the terminal device is determined according to these information. The displacement information of the terminal device may be determined via an acceleration sensor, a gyroscope and/or a positioning module in the terminal device. The light intensity information may be determined via a ray sensor in the terminal device. The first using state of the terminal device may further be determined according to the displacement information, the light intensity information of the environment, the first power consumption and the off-screen duration simultaneously.

When the time when the charging connection is established is within the time interval and the first using state of the terminal device meets the first preset using state, the battery is charged via the first charging policy.

When the battery is charged according to the first cut-off voltage and the first cut-off current in the first preset charging parameter, the battery is charged at a constant current by way of the constant current charging mode. In the process, the voltage for charging the battery is defined as the first cut-off voltage, when the present battery voltage reaches the first cut-off voltage, the voltage of the battery is no longer raised. When the battery is charged at a constant current, the battery may be charged in a constant voltage charging mode by the charging current relative to a relatively large current, thereby improving the charging efficiency of the battery.

Since a result of polarization phenomenon of the battery, a part of voltage in the battery voltage is a polarization voltage, battery polarization internal resistance may cause a virtually high voltage, such that the actual voltage of the battery may be smaller than the first cut-off voltage. The charging current in the process may be set according to the actual charging scene or the performance index of the battery, the performance index of the battery may include the rated current, the rated capacity, the rated voltage and the like.

In order to further charge more electric quantities of the battery without destroying performance of the battery, the battery is charged at a constant voltage by adopting a constant voltage charging mode. In the process, the current for charging the battery is defined as the first cut-off current, and the voltage of the battery is the first cut-off voltage. With increase of the charging capacity, the actual voltage of the battery will be closer and closer to the first cut-off voltage, and at the moment, in order to maintain the constant voltage of the battery, the present charging current value will be decreased gradually until the present charging current is decreased to the first cut-off current.

By considering the charging efficiency, the first cut-off current may be set at 0.1 C, etc., and C is equal to battery capacity divided by h (C=equal to battery capacity/h). By charging the battery at a constant current and a constant voltage, more electric quantities may be charged into the battery.

In an embodiment, before the present charging parameter of the battery does not reach the first preset charging parameter, switching between constant current charging and constant voltage charging may be executed repeatedly until the present charging parameter reaches the first preset charging parameter.

In another embodiment, a method for maintaining the present electric quantity is further provided. Referring to the FIG. 3, it is a flow chart showing the method for maintaining the present electric quantity. At S300, the operation of maintaining the present electric quantity of the battery when the present charging parameter reaches the first preset charging parameter includes the following operations.

At S301, the present electric quantity of the battery is determined when the present charging parameter reaches the first preset charging parameter.

The present electric quantity of the battery is determined when the present charging parameter reaches the first preset charging parameter. The specific monitoring method and the method for determining the present electric quantity of the battery may be detected and determined via a related monitoring module and a determining module in the terminal device. As long as the present charging parameter is detected and the present electric quantity of the battery is determined.

At S302, a fluctuation range of the present electric quantity is maintained in a preset threshold value by floating charge.

Since the battery has a self-discharging characteristic, i.e., the battery releases electric energy naturally after the battery is stopped charging. Thus, in order to remedy the electric quantity lost by self-discharge of the battery, the battery is charged in a floating charging mode, the electric quantity of the battery may be maintained at an electric quantity when the present charging parameter reaches the first preset charging parameter, i.e., the present electric quantity of the battery. Thus, the probability of the loss of the electric quantity of the battery may be reduced, and the electric quantity of the battery is maintained at the present electric quantity to the maximum extent, thereby guaranteeing that the battery has more electric quantity.

In another embodiment, referring to the FIG. 4, it is a flow chart showing S500. At S500, after the time when the present electric quantity is maintained reaches the starting time, the operation of charging the battery via the second charging policy and charging the battery full from the present electric quantity before the cut-off time includes the following operations.

At S501, a second preset charging parameter through which the battery is charged via the second charging policy is determined according to the state of the terminal device; and the second preset charging parameter includes a second cut-off voltage for charging the battery at a constant current and/or a second cut-off current for charging the battery at a constant voltage.

At S502, the battery is charged according to the second preset charging parameter, and the battery is charged full from the present electric quantity before the cut-off time.

For operation S501, after a time when the present electric quantity is maintained reaches the starting time, the battery is charged continuously via the second charging policy. Before the battery is charged via the second charging policy, the second preset charging parameter of the second charging policy is determined according to the state of the terminal device, and the battery is charged continuously according to the second preset charging parameter in the second charging policy.

Different using states correspond to different second preset charging parameters, and the battery is charged according to the second preset charging parameters corresponding to the different using states to adjust the second cut-off voltage and/or the second cut-off current for charging the battery dynamically. Therefore, the charging parameter for charging the battery may be adjusted flexibly and dynamically, such that the loss and aging of the battery are reduced conveniently, and thus, the service life of the battery may be prolonged conveniently.

The state of the terminal device may include the using state of the terminal device, and the using state may indicate whether the terminal device in an on state is in a dormant state, whether there is an application in a front desk running state, and the like. Exemplarily, if the terminal device is in the using state, specific using condition information is further acquired, the using condition information may include a bright screen duration, an off-screen duration and/or power consumption, etc. The electric quantities of the battery consumed by the terminal device in different using states are different, and the second cut-off voltage and/or the second cut-off current are determined according to the using state of the terminal device. Thus, the second cut-off voltage and/or the second cut-off current may be determined flexibly according to the actual using condition of the terminal device, and the charging parameter for charging the battery in the preset charging stage is adjusted flexibly, such that the service life of the battery may be prolonged conveniently. Meanwhile, more electric quantities may be charged into the battery according to the actual using condition of the terminal device. In order to describe conveniently, the state of the terminal device here may be taken as the second using state.

For operation S502, after the second preset charging parameter is determined, the battery is charged via the second preset charging parameter, and the battery is charged full before the cut-off time.

The battery may be charged at a constant current by way of a constant current charging mode according to the second cut-off voltage, and the electric quantity of the battery is charged full before the cut-off time. The second cut-off voltage is greater than the first cut-off voltage, which may be the rated voltage and the like.

The battery may be charged at a constant voltage by way of a constant voltage charging mode according to the second cut-off current, and the electric quantity of the battery is charged full before the cut-off time. The second cut-off current is smaller than the first cut-off current.

The battery may further be charged at a constant current by way of the constant current charging mode, and after the present charging voltage reaches the second cut-off voltage, then the battery is then charged at a constant voltage by way of the constant voltage charging mode until the present charging current reaches the second cut-off current. When the present charging current reaches the second cut-off current or before the present charging current reaches the second cut-off current, the battery is charged full with electric quantity.

In another embodiment, the charging parameter through which the battery is charged according to the second charging policy may further include a charging mode parameter. The charging mode parameter controls the charging mode for charging the battery. The charging mode at least includes at least one of: charging at a constant current; charging at a constant voltage; or trickling charging.

After the charging mode parameter is determined, the corresponding charging mode is determined according to the charging mode parameter, and the battery in the terminal device is charged according to the charging mode. After the charging mode is determined according to the charging mode parameter, the battery is charged according to the cut-off voltage and/or cut-off current corresponding to the charging mode. For example, in the second charging policy, the charging mode is determined according to the charging mode parameter, then the second cut-off voltage and/or second cut-off current may be determined, the battery is then charged, and the battery is charged full before the cut-off time.

In another embodiment, the second charging policy may include a plurality of second charging sub policies. Different charging parameters corresponding to the different second charging sub policies according to the using state of the terminal device in the second charging policy, i.e., different second charging sub policies correspond to different cut-off voltages and/or cut-off currents. The second cut-off voltage may include a plurality of different cut-off voltages that are increased successively and/or the second cut-off current may include a plurality of different cut-off currents that are decreased successively.

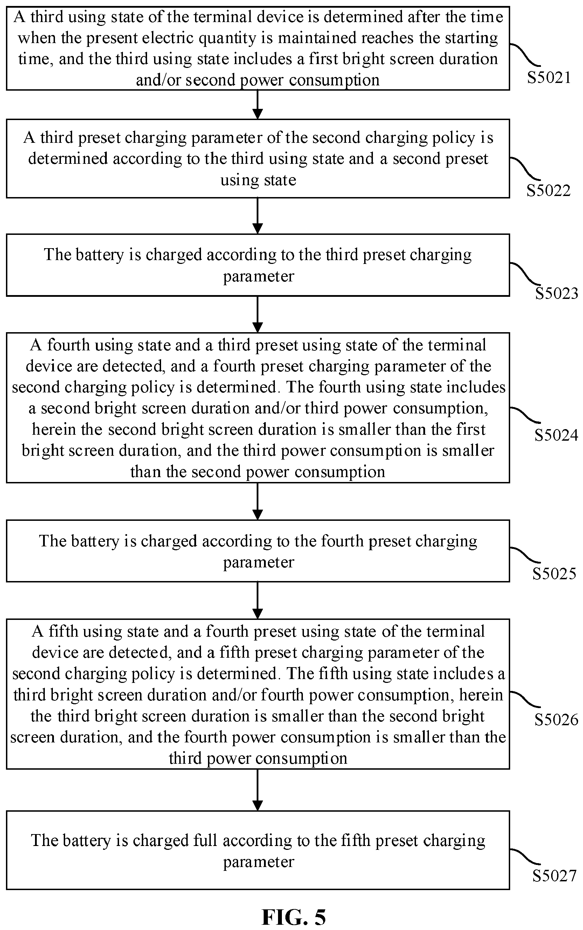

In another embodiment, a method for charging a battery according to a second charging policy is further provided. Referring to FIG. 5, it is a flow schematic diagram for charging a battery according to a second preset charging parameter. At S502, the operation of charging the battery according to the second preset charging parameter and charging the battery full from the present electric quantity before the cut-off time further includes the following operations.

At S5021, a third using state of the terminal device is determined after the time when the present electric quantity is maintained reaches the starting time; and the third using state includes a first bright screen duration and/or second power consumption.

At S5022, a third preset charging parameter of the second charging policy is determined according to the third using state and a second preset using state.

At S5023, the battery is charged according to the third preset charging parameter.

At S5024, a fourth using state and a third preset using state of the terminal device are detected, and a fourth preset charging parameter of the second charging policy is determined. The fourth using state includes a second bright screen duration and/or third power consumption; herein the second bright screen duration is smaller than the first bright screen duration, and the third power consumption is smaller than the second power consumption.

At S5025, the battery is charged according to the fourth preset charging parameter.

At S5026, a fifth using state and a fourth preset using state of the terminal device are detected, and a fifth preset charging parameter of the second charging policy is determined. The fifth using state includes a third bright screen duration and/or fourth power consumption; herein the third bright screen duration is smaller than the second bright screen duration, and the fourth power consumption is smaller than the third power consumption.

At S5027, the battery is charged full according to the fifth preset charging parameter.

In the embodiment, the second charging policy includes three sub charging policies. The second using state includes the third using state, the fourth using state and the fifth using state. The second preset charging parameter includes the third preset charging parameter, the fourth preset charging parameter and the fifth preset charging parameter, i.e., the second preset charging parameter includes three sub parameters.

At S5021, the using state here including the first bright screen duration and/or the second power consumption is taken as the third using state, i.e., the using state when the battery is charged via the second charging policy. Since the first cut-off voltage is smaller than the rated voltage of the battery, it is further necessary to charge the battery subsequently after the battery is charged according to the first cut-off voltage and/or the first cut-off current, i.e., the electric quantity of the battery is maintained at the present electric quantity, such that it is more convenient to charge more electric quantities into the battery and to even charge the battery full.

When the battery is charged continuously, it is necessary to charge the battery according to a present state of the terminal device. Present states are different, and corresponding charging parameters are different, such that the control parameter of charging may be adjusted flexibly according to performance parameter of the battery itself and the using state of the terminal device, occurrence of conditions such as overcharge, oversaturation and overtemperature of the battery are reduced, the loss and aging of the battery are further reduced, and the service life of the battery is prolonged. When the battery is charged continuously via the second charging policy, it is further necessary to detect the present state of the terminal device, and the present state at the moment includes the first bright screen duration and/or the second power consumption.

In order to differentiate the bright screen duration here and the bright screen duration of the terminal device in subsequent charging, the bright screen duration here is taken as the first bright screen duration. In order to differentiate the power consumption of the terminal device in the present stage, the first power consumption, and the power consumption of the terminal device in subsequent charging, the power consumption here is taken as the second power consumption.

At S5022, the third preset charging parameter of the second charging policy is determined according to the third using state and the second preset using state. After the first bright screen duration and/or the second power consumption is determined, whether the terminal device meets the second preset using state is determined according to the first bright screen duration and/or the second power, and the second preset using state includes a first preset bright screen duration and second preset power consumption. Specifically, it may be determined via a second condition, whether the first bright screen duration is longer than the first preset bright screen duration is determined and/or whether the second power consumption is greater than the second preset power consumption is determined. The first preset bright screen duration and the second preset power consumption set in the second condition may be set according to an actual using scene. When the first bright screen duration is longer than the first preset bright screen duration and/or the second power consumption is greater than the second preset power consumption, it may be determined that the third using state of the terminal device meets the second preset using state.

Besides the first bright screen duration and/or the second power consumption, position information, light intensity information of the environment of the terminal device may be further detected, and it is determined whether the third using state of the terminal device meets the second preset using state according to the first bright screen duration, the second power consumption, the position information and/or the light intensity information of the terminal device. The position information of the terminal device may be determined via an acceleration sensor, a gyroscope, a positioning module and the like in the terminal device, and the light intensity information may be detected by a light sensor.

When it is determined that the third using state of the terminal device meets the second preset using state, a third cut-off voltage and/or a third cut-off current for charging the battery is determined, and the third cut-off voltage is the rated voltage.

The third preset charging parameter includes the third cut-off voltage and/or the third cut-off current. The battery is charged according to the third cut-off voltage and/or the third cut-off current. The third cut-off voltage is the rated voltage of the battery, and the battery is charged according to the third cut-off voltage. The third cut-off current may be a preset cut-off current and is smaller than the first cut-off current.

At S5023, the battery is charged according to the third preset charging parameter.

The battery is charged according to the third cut-off voltage and/or the third cut-off current after the third cut-off voltage and/or the third cut-off current may be determined. In the step, the battery may be charged at a constant current first and is then charged at a constant voltage similarly.

At S5024, the fourth using state and the third preset using state of the terminal device are detected, and the fourth preset charging parameter of the second charging policy is determined. The fourth using state includes the second bright screen duration and/or the third power consumption; herein the second bright screen duration is longer than the first bright screen duration, and the third power consumption is smaller than the second power consumption.

After the battery is charged according to the third cut-off voltage and/or the third cut-off current, the using state of the terminal device is detected continuously, including the second bright screen duration and/or the third power of the terminal device. Certainly, besides the second bright screen duration and/or the third power, user button operation and/or touch operation may further be included.

After the second bright screen duration and/or the third power consumption is determined, whether the terminal device meets the third preset using state is determined according to the second bright screen duration and/or the third power consumption, and the third preset using state includes a second preset bright screen duration and third preset power consumption. Specifically, it may be determined via a third condition, whether the second bright screen duration is longer than the second preset bright screen duration is determined and/or whether the third power consumption is greater than the third preset power consumption is determined. The second preset bright screen duration and the third preset power consumption set in the third condition may be set according to an actual using scene. When the second bright screen duration is longer than the second preset bright screen duration and/or the third power consumption is greater than the third preset power consumption, it may be determined that the fourth using state of the terminal device meets the third preset using state.

The second bright screen duration in the embodiment is smaller than the first bright screen duration, and the third power is smaller than the second power. In order to reduce loss and aging of the battery caused by charging, it is unnecessary to charge the voltage of the battery to the rated voltage, and at the moment, it is necessary to charge the battery according to the fourth using stat of the terminal device, i.e., the second bright screen duration and/or the third power. Occurrence of conditions such as overcharge, oversaturation and heating of the battery is reduced and aging of the battery is reduced, and the service life of the battery is prolonged conveniently.

When it is determined that the fourth using state of the terminal device meets the third preset using state, the fourth preset charging parameter, i.e., a fourth cut-off voltage and/or a fourth cut-off current is determined. The fourth cut-off voltage is smaller than the third cut-off voltage, and the fourth cut-off current is larger than the third cut-off current.

At S5025, the battery is charged according to the fourth preset charging parameter. After the second bright screen duration and/or the third power consumption is detected, the fourth cut-off voltage and/or the fourth cut-off current is determined according to the second bright screen duration and/or the third power consumption. The battery is charged according to the fourth cut-off voltage and/or the fourth cut-off current, the fourth cut-off voltage is smaller than the third cut-off voltage, and the fourth cut-off current is larger than the third cut-off current. When the fourth cut-off voltage is smaller than the third cut-off voltage, the battery may be stopped charging when the voltage of the battery meets the fourth cut-off voltage; and/or the battery is topped charging when the charging current is smaller than the fourth cut-off current. Thus, a condition that the capacity is charged full when the voltage of the battery is charged to the rated voltage directly, such that the battery is charged in stages, and therefore, occurrence of conditions such as overcharge, oversaturation and heating after the battery is charged full may be reduced.

The battery is charged at a constant voltage via the fourth cut-off current in constant voltage charging mode, and/or the battery is charged at a constant current via the fourth cut-off voltage in a constant current charging mode.

The battery is charged at a constant current according to the fourth cut-off voltage after the fourth cut-off voltage and/or the fourth cut-off current is determined. Since the fourth cut-off voltage is smaller than the third cut-off voltage, the voltage of the battery is charged to the third cut-off voltage according to the third cut-off voltage after the voltage of the battery is charged to the fourth cut-off voltage. Or the battery is charged according to the fourth cut-off current. Since the fourth cut-off current is greater/larger than the third cut-off current, the battery is charged continuously according to the third cut-off current. Or the battery is charged at a constant current according to the fourth cut-off voltage. After the voltage of the battery reaches the fourth cut-off voltage, the battery is charged at a constant voltage according to the fourth cut-off current, and the battery is stopped charging when the charging current is smaller than the fourth cut-off current. By way of charging the battery at a constant current and a constant voltage, more electric quantities may be charged into the battery.

At S5026, after the battery is charged according to the fourth cut-off voltage and/or the fourth cut-off current, the state of the terminal device may further be detected continuously, i.e., the fifth using state including the third bright screen duration and/or the fourth power consumption of the terminal device. The third bright screen duration is longer than the second bright screen duration, and the fourth power consumption is greater than the third power consumption. Whether the fourth using state of the terminal device meets the fourth preset using state is determined. When the fourth using state of the terminal device meets the fourth preset using state, the fifth preset charging parameter is determined according to the third bright screen duration and/or the fourth power consumption, including a fifth cut-off voltage and/or a fifth cut-off current, the fifth cut-off voltage being the rated voltage and the fifth cut-off current being smaller than the fourth cut-off current.

At S5027, the battery is charged full according to the fifth cut-off voltage and/or the fifth cut-off current.

In another embodiment, the second charging policy may include at least one charging sub policy, i.e., at least one using state and at least one preset charging parameter.

In another embodiment, a fourth bright screen duration and/or fifth power consumption of the terminal device may further be detected, i.e., a sixth using state. The sixth using state includes the fourth bright screen duration and the fifth power consumption; herein the fourth bright screen duration is longer than the third bright screen duration, and the fifth power consumption is greater than the fourth power consumption. A sixth cut-off voltage and/or a sixth cut-off current is determined according to the fourth bright screen duration and/or the fifth power consumption, the sixth cut-off voltage is greater than the fifth cut-off voltage, and the sixth cut-off current is smaller than the fifth cut-off current. By parity of reasoning, the larger the cut-off voltage is, the closer the third cut-off voltage is; and the smaller the cut-off current is, the closer the third cut-off current is. Finally, the battery is charged full according to the third cut-off voltage and/or the third cut-off current.

Different cut-off voltages and/or cut-off currents are determined according to different states of the terminal device to charge the battery, such that the battery is charged in stages, the cut-off voltage and/or the cut-off current for charging the battery may be adjusted flexibly, and by way of charging the battery at a constant current and a constant voltage, more electric quantities may be charged into the battery.

In another embodiment, when the third using state of the terminal device does not meet the second preset using state and/or the fourth using state of the terminal device does not meet the third preset using state, the starting time for charging through the fifth cut-off voltage and/or the fifth cut-off current, the fourth cut-off voltage and/or the fourth cut-off current, and the third cut-off voltage and/or the third cut-off current is determined according to the using state of the device and the cut-off time of the time interval.

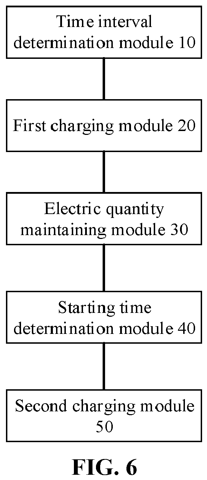

In another embodiment, a charging apparatus is further provided. Referring to the FIG. 6, the charging apparatus includes a time interval determination module 10, a first charging module 20, an electric quantity maintaining module 30, a starting time determination module 40 and a second charging module 50.

The time interval determination module 10 is configured to determine a time interval for charging a battery according to historical charging data.

The first charging module 20 is configured to charge the battery via a first charging policy within the time interval, and the first charging policy includes a first preset charging parameter.

The electric quantity maintaining module 30 is configured to acquire a present charging parameter when the battery is charged according to the first charging policy; and when the present charging parameter reaches the first preset charging parameter 30, maintain a present electric quantity of the battery.

The starting time determination module 40 is configured to determine a starting time when the battery is charged according to a second charging policy according to a state of a terminal device and a cut-off time of the time interval.

The second charging module 50 is configured to charge the battery via the second charging policy after a time when the present electric quantity is maintained reaches the starting time, and charge the battery full from the present electric quantity before the cut-off time. FIG. 6 merely illustrates those modules.

In another embodiment, the first charging module 20 includes a first preset charging parameter determination module and a charging unit.

The first preset charging parameter determination module is configured to determine the first preset charging parameter.

The charging unit configured to charge the battery according to the first preset charging parameter and the present charging parameter.

In another embodiment, the first preset charging parameter determination module is specifically configured to: determine the first preset charging parameter according to at least one of: attribute data of the battery, the historical charging data, or state information of the terminal device including the battery.

In another embodiment, the first preset charging parameter includes a first cut-off voltage and/or a first cut-off current; and the present charging parameter includes a present battery voltage and/or a present charging current.

The charging unit includes a first charging unit for charging the battery at a constant current according to the first cut-off voltage until the present battery voltage reaches the first cut-off voltage; and/or, a second charging unit for charging the battery at a constant voltage according to the first cut-off current until the present charging current reaches the first cut-off current.

In another embodiment, the electric quantity maintaining module 30 includes a present electric quantity determination unit and a floating charge unit.

The present electric quantity determination unit is configured to determine the present electric quantity of the battery when the present charging parameter reaches the first preset charging parameter.

The floating charge unit is configured to maintain a fluctuation range of the present electric quantity in a preset threshold value by floating charge.

In another embodiment, the second charging module 50 includes a second preset charging parameter determination unit and a second charging unit.

The second preset charging parameter determination unit is configured to determine a second preset charging parameter through which the battery is charged via the second charging policy according to the state of the terminal device; herein the second preset charging parameter includes a second cut-off voltage for charging the battery at a constant current and/or a second cut-off current for charging the battery at a constant voltage.

The second charging unit is configured to charge the battery according to the second preset charging parameter and charging the battery full from the present electric quantity before the cut-off time.

In another embodiment, the using state includes whether the terminal device in an on state is in a dormant state, whether there is an application in a front desk running state and a bright screen state, and/or power consumption.

In another embodiment, the time interval determination module 10 includes a first time interval determination unit or a second time interval determination unit.

The first time interval determination unit is configured to determine a time interval for charging the battery full according to time information of a charging interval in the historical charging data.

The second time interval determination unit is configured to determine a time interval for charging the battery full according to the historical charging data and a deep learning model.

In another embodiment, the apparatus further includes a first determination unit.

The first determination unit is configured to determine a time when a charging connection is established. The first charging module is further configured to determine that the battery is charged via the first charging policy in response to determining that the time when the charging connection is established is within the time interval.

In another embodiment, the apparatus further includes a third charging module configured to charge the battery via a third charging policy in response to determining that the time when the charging connection is established is not within the time interval; and the third charging policy is different from the first charging policy and the second charging policy.

In another embodiment, an electronic device is also provided, which includes: a processor and a memory configured to store instructions executable by the processor; when the processor is configured to run the executable instructions, the executable instructions execute the method as described in any abovementioned embodiments.

In another embodiment, a non-transitory computer-readable storage medium is also provided, in which computer-executable instructions are stored, the computer-executable instructions are executed by a processor to implement the method as described in any abovementioned embodiments.

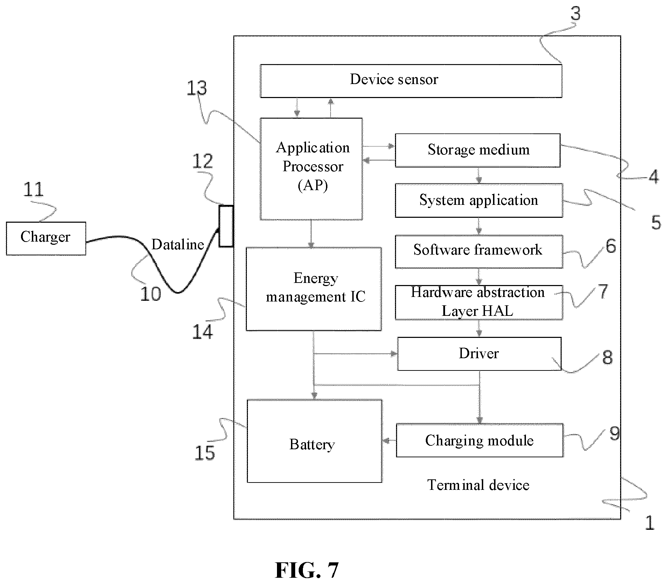

In another embodiment, a terminal device is further provided. Referring to the FIG. 7, it is a structural schematic diagram of the terminal device 1. The terminal device 1 is charged via a charger 11, a charging wire 10 and a charging interface 12 for providing connecting and recognizing functions for the terminal device 1.

The terminal device 1 includes a device sensor 3, a storage medium 4, a system application 5, a software frame 6, a hardware abstraction layer 7, a driver 8 and a charging module 9, an application processor (AP) 13, an energy management IC14 and a battery 15. The system application 5 may be an application in an application layer, including an application program, and the storage medium 4 may be a memory and the like. Charging data of the terminal device within a period of time, for example, a week or a month, may be stored via the system application 5 and the storage medium 4, and a time interval T1-T2 for charging is obtained by performing data analysis and learning by the AP 13. T1 and T2 are not defined in a certain fixed time and may be a time interval respectively, and the T1 and T2 may be adjusted correspondingly along with change of a user behavior mode. Charging of the battery 15 is further controlled by interaction with the energy management IC14, the driver 8, the device charger 9 and the battery 15. The device sensor 3 may include a light sensor, an acceleration sensor, a gyroscope and/or a global positioning system (GPS) module and the like. Interruption of an intelligent charging mode is further controlled by interaction of the device sensor 3 and the application processor 13.

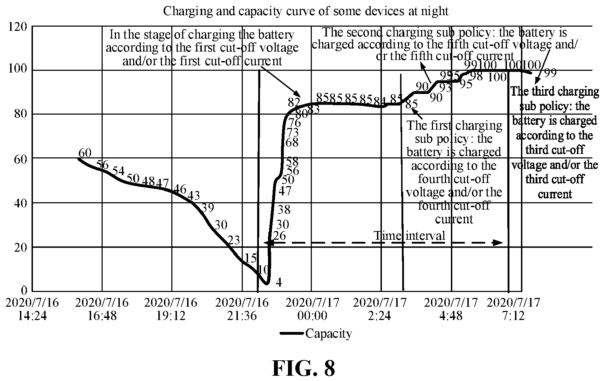

FIG. 8 is a curve graph for charging the terminal device at night, and a set time interval may be determined as night. A transverse coordinate represents the charging time and a vertical coordinate represents the battery capacity. Vertical lines in the vertical coordinate direction of the left and right sides in the figure represent the starting time and the cut-off time of the determined time interval, a time range between the starting time and the cut-off time is a time interval for charging, and in the embodiment, the time range is the time interval for charging the terminal device habitually. A vertical line in a middle position in the vertical coordinate direction represents the starting time of the preset charging stage. The battery is charged via the first charging policy, i.e., the first cut-off voltage is V0 and the first cut-off current is 10 in the stage of charging the battery according to the first cut-off voltage and/or the first cut-off current; the second charging policy includes the first charging sub policy, herein the fourth cut-off voltage is V2 and the fourth cut-off current is 12; the second charging sub policy, herein the fifth cut-off voltage is V3 and the fifth cut-off current is 13; and the third charging sub policy, herein the third cut-off voltage is V1 and the third cut-off current is I1, and V1 is the rated voltage of the battery.

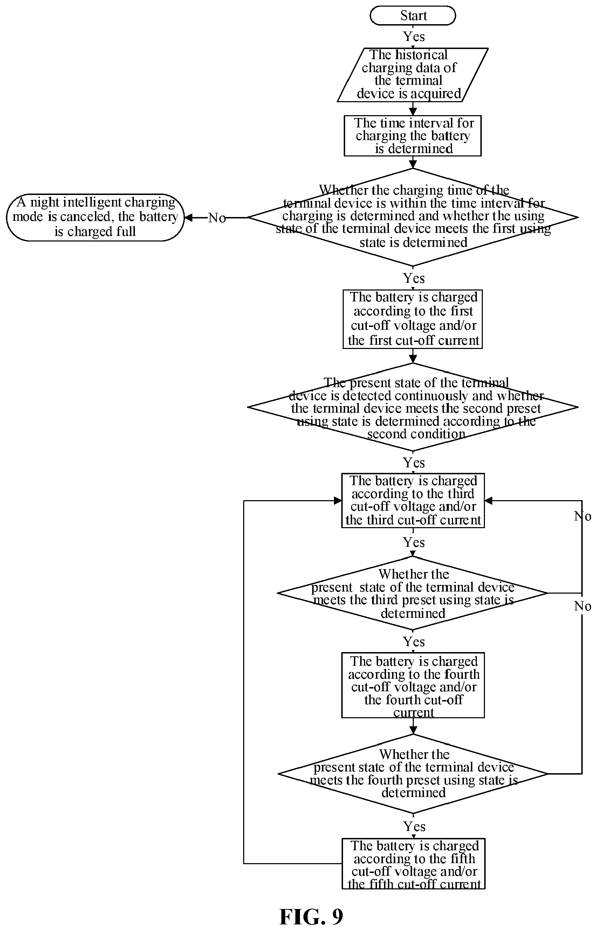

FIG. 9 is a flow chart showing a charging method, which is a method for charging the battery at night.

Referring to FIG. 8 and FIG. 9 simultaneously, the method includes the following operations.

The historical charging data of the terminal device is acquired.

The charging interval for charging is determined according to the historical charging data, whether the charging time is in the charging interval is determined after it is determined that the terminal device is connected to the charger, and whether the terminal device is in a unused state is determined according to the present state of the terminal device and the set corresponding first condition. The first condition, for example, the power consumption of the mobile phone is smaller than XlmA and the off-screen duration is longer than X2min. When it is determined that the time when the charging connection is established is within the time interval and the terminal device meets the first preset using state according to the present state of the terminal device and the set corresponding first condition, the battery is charged via the first charging policy, the battery is charged in a constant current and constant voltage mode according to the first cut-off current 10 and the first cut-off voltage V0, and the electric quantity is maintained when the battery voltage reaches the V0. In FIG. 8, V0 is 85%. After the battery is self-discharged and has a loss of 1-84%, the battery is charged by using the floating charge mode, and the battery voltage is kept at V0. When the terminal device does not meet the first preset using state, i.e., a night intelligent charging mode is canceled, the battery is charged full.

After the time when the present electric quantity is maintained reaches the starting time, the battery is charged via the second charging policy, the present state of the terminal device is detected continuously, and the third cut-off voltage V1 and/or the third cut-off current I1 are determined and whether the battery is charged according to V1 and I1 according to the present state of the terminal device and the set corresponding second condition. The vertical line in a middle position in the vertical coordinate direction in FIG. 8 represents the starting time of the second charging stage.

After the battery is charged according to V0 and/or 10, the operation of detecting the present state of the terminal device continuously further includes: whether there is change on the present state of the terminal device is monitored continuously and the changed duration is monitored, including change of detection values such as power consumption, bright screen duration, acceleration sensor and light sensor. When the present state meets a set determination condition change item, the battery is charged according to V1 and I1 in a constant current and constant voltage mode, i.e., the battery is charged via the third charging sub policy.

After the battery is charged according to V1 and I1, the present state of the terminal device is detected continuously. When the present state meets the corresponding set condition, the battery is charged according to V1 and I1 in a constant current and constant voltage mode, i.e., the battery is charged via the first charging sub policy. For example, it is monitored that the user has a transient mobile phone bright screen, light sensor signal changes or looking through an APP and the like. Referring to FIG. 8, the electric quantity of the battery is charged to 90% according to V2 and 12.

After the battery is charged in a constant current and constant voltage mode according to V2 and 12, the present state of the terminal device is detected continuously. When a certain another determining condition is met, the battery is charged according to V3 and 13, i.e., the battery is charged via the second charging sub policy. For example, when the mobile phone bright screen time range meets a determining condition of the second charging sub policy and the power consumption is not increased in a large scale, the terminal device is determined to be in the using state without frequency movements, the battery enters the second charging sub policy, and the battery is charged according to V3 and 13. Referring to FIG. 8, the electric quantity of the battery is charged to 95% according to V3 and 13. After the second charging sub policy is finished, the battery enters the third charging sub policy automatically. The battery is charged according to V1 and I1. Referring to FIG. 8, the electric quantity of the battery is charged to 100% according to V1 and I1.

It is to be noted that "first" and "second" in the embodiments of the present disclosure are only for convenient expression and distinguishing and have no other special meanings.

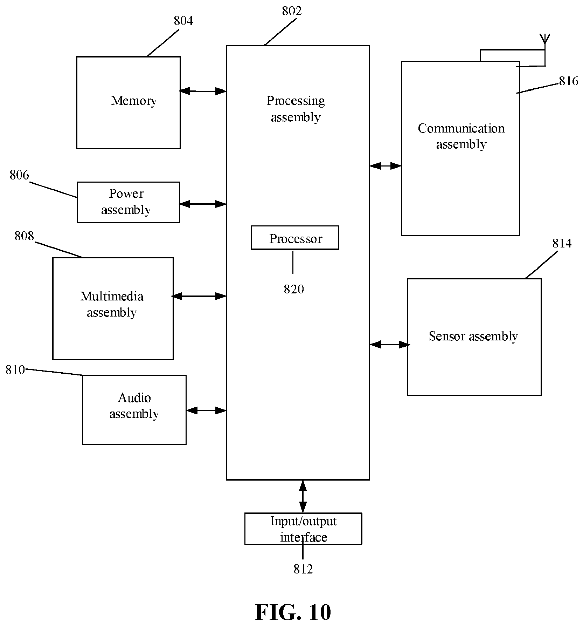

FIG. 10 is a block diagram of a terminal device, according to an exemplary embodiment. For example, the terminal device may be a mobile phone, a computer, a digital broadcast terminal, a messaging device, a gaming console, a tablet, a medical device, exercise equipment, a personal digital assistant and the like.

Referring to FIG. 10, the terminal device may include one or more of the following components: a processing component 802, a memory 804, a power component 806, a multimedia component 808, an audio component 810, an input/output (I/O) interface 812, a sensor component 814, or a communication component 816.

The processing component 802 typically controls overall operations of the terminal device, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the terminal device. Examples of such data include instructions for any applications or methods operated on the terminal device, contact data, phonebook data, messages, pictures, video, etc. The memory 804 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 806 provides power for various components of the terminal device. The power component 806 may include a power management system, one or more power supplies, and other components associated with generation, management and distribution of power for the terminal device.

The multimedia component 808 includes a screen providing an output interface between the terminal device and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a period of time and a pressure associated with the touch or swipe action. In some embodiments, the multimedia component 808 includes a front camera and/or a rear camera. The front camera and/or the rear camera may receive external multimedia data when the terminal device is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a microphone (MIC), and the MIC is configured to receive an external audio signal when the terminal device is in an operation mode, such as a call mode, a recording mode and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and peripheral interface modules, such as a keyboard, a click wheel, buttons and the like. The buttons may include, but are not limited to: a home button, a volume button, a starting button and a locking button.

The sensor component 814 includes one or more sensors configured to provide status assessments in various aspects for the terminal device. For instance, the sensor component 814 may detect an on/off status of the terminal device and relative positioning of components, such as a display and small keyboard of the terminal device, and the sensor component 814 may further detect a change in a position of the terminal device or a component of the terminal device, presence or absence of contact between the user and the terminal device, orientation or acceleration/deceleration of the terminal device and a change in temperature of the terminal device. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal device and other devices. The terminal device may access a communication-standard-based wireless network, such as a wireless fidelity (WiFi) network, a 2nd-generation (2G) or 3rd-generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an exemplary embodiment, the terminal device may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, and is configured to execute the abovementioned method.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A charging method, **characterized in that** the charging method comprises:
determining (S100) a time interval for charging a battery according to historical charging data;
charging (S200) the battery via a first charging policy within the time interval; wherein the first charging policy comprises a first preset charging parameter;
acquiring (S300) a present charging parameter when the battery is charged according to the first charging policy; and when the present charging parameter reaches the first preset charging parameter, maintaining a present electric quantity of the battery;
determining (S400) a starting time when the battery is charged according to a second charging policy according to a state of a terminal device and a cut-off time of the time interval; and
after a time when the present electric quantity is maintained reaches the starting time, charging (S500) the battery via the second charging policy, and charging the battery full from the present electric quantity before the cut-off time.

2. The method of claim 1, wherein the charging the battery via the first charging policy comprises:
determining (S201) the first preset charging parameter; and
charging (S202) the battery according to the first preset charging parameter and the present charging parameter.

3. The method of claim 2, wherein the determining the first preset charging parameter comprises:
determining the first preset charging parameter according to at least one of: attribute data of the battery, the historical charging data, or state information of the terminal device comprising the battery.

4. The method of claim 2, wherein the first preset charging parameter comprises at least one of a first cut-off voltage or a first cut-off current, and the present charging parameter comprises at least one of a present battery voltage or a present charging current; and
wherein the charging the battery according to the first preset charging parameter and the present charging parameter comprises at least one of following scenarios:
charging the battery at a constant current according to the first cut-off voltage until the present battery voltage reaches the first cut-off voltage; or
charging the battery at a constant voltage according to the first cut-off current until the present charging current reaches the first cut-off current.

5. The method of claim 1, wherein the maintaining the present electric quantity of the battery when the present charging parameter reaches the first preset charging parameter comprises:
determining (S301) the present electric quantity of the battery when the present charging parameter reaches the first preset charging parameter; and
maintaining (S302) a fluctuation range of the present electric quantity in a preset threshold value by floating charge.

6. The method of claim 1, wherein the charging the battery via the second charging policy after the time when the present electric quantity is maintained reaches the starting time and charging the battery full from the present electric quantity before the cut-off time comprises:
determining (S501) a second preset charging parameter through which the battery is charged via the second charging policy according to the state of the terminal device; wherein the second preset charging parameter comprises at least one of: a second cut-off voltage for charging the battery at a constant current, or a second cut-off current for charging the battery at a constant voltage; and
charging (S502) the battery according to the second preset charging parameter, and charging the battery full from the present electric quantity before the cut-off time.

7. The method of claim 1 or 6, wherein the using state comprises at least one of following data:
whether the terminal device in an on state is in a dormant state, whether there is an application in a front desk running state and a bright screen state, or power consumption.

8. The method of claim 1, wherein the determining the time interval for charging the battery according to the historical charging data comprises:
determining a time interval for charging the battery full according to time information of a charging interval in the historical charging data; or
determining a time interval for charging the battery full according to the historical charging data and a deep learning model.

9. The method of claim 1, further comprising:
determining a time when a charging connection is established;
wherein the charging the battery via the first charging policy comprises:
determining that the battery is charged via the first charging policy in response to determining that the time when the charging connection is established is within the time interval.

10. The method of claim 9, further comprising:
charging the battery via a third charging policy in response to determining that the time when the charging connection is established is not within the time interval; wherein the third charging policy is different from the first charging policy and the second charging policy.

11. A charging apparatus, **characterized in that** the charging apparatus comprises:
a time interval determination module (10), configured to determine a time interval for charging a battery according to historical charging data;
a first charging module (20), configured to charge the battery via a first charging policy within the time interval; wherein the first charging policy comprises a first preset charging parameter;
an electric quantity maintaining module (30), configured to acquire a present charging parameter when the battery is charged according to the first charging policy; and when the present charging parameter reaches the first preset charging parameter, maintain a present electric quantity of the battery;
a starting time determination module (40), configured to determine a starting time when the battery is charged according to a second charging policy according to a state of a terminal device and a cut-off time of the time interval; and
a second charging module (50), configured to charge the battery via the second charging policy after a time when the present electric quantity is maintained reaches the starting time, and charge the battery full from the present electric quantity before the cut-off time.

12. The charging apparatus of claim 11, wherein the first charging module (20) comprises:
a first preset charging parameter determination module, configured to determine the first preset charging parameter; and
a charging unit, configured to charge the battery according to the first preset charging parameter and the present charging parameter.

13. The charging apparatus of claim 11, wherein the electric quantity maintaining module (30) comprises:
a present electric quantity determination unit, configured to determine the present electric quantity of the battery when the present charging parameter reaches the first preset charging parameter; and
a floating charge unit, configured to maintain a fluctuation range of the present electric quantity in a preset threshold value by floating charge.

14. The charging apparatus of claim 11, wherein the second charging module (50) comprises:
a second preset charging parameter determination unit, configured to determine a second preset charging parameter through which the battery is charged via the second charging policy according to the state of the terminal device; wherein the second preset charging parameter comprises at least one of: a second cut-off voltage for charging the battery at a constant current, or a second cut-off current for charging the battery at a constant voltage; and
a second charging unit, configured to charge the battery according to the second preset charging parameter and charging the battery full from the present electric quantity before the cut-off time.

15. A computer-readable storage medium, in which computer-executable instructions are stored, the computer-executable instructions are executed by a processor to implement the method of any one of claims 1 to 10.
